## Europäisches Patentamt

## European Patent Office

## Office européen des brevets

(19)

(11) Numéro de publication: **0 136 227 B1**

(12) **FASCICULE DE BREVET EUROPEEN**

(45) Date de publication du fascicule du brevet:
01.03.89

(51) Int. Cl.⁴: **C 08 G 16/02, C 08 L 61/00, C 08 J 5/24**

(21) Numéro de dépôt: **84401788.9**

(22) Date de dépôt: **11.09.84**

(54) Nouveaux polymères et prépolymères thermodurcissables, à durcissement accéléré, résultant de la polycondensation de dérivés de pyridine et de dialdéhydes aromatiques et de l'adjonction d'un composé phénolique.

(30) Priorité: **13.09.83 FR 8314547**

(43) Date de publication de la demande:
**03.04.85 Bulletin 85/14**

(45) Mention de la délivrance du brevet:
**01.03.89 Bulletin 89/9**

(84) Etats contractants désignés:
**CH DE FR GB LI**

(56) Documents cités:
**DE-B- 1 121 331**
**DE-C- 749 268**
**FR-A- 2 261 297**
**US-A- 2 600 698**

Le dossier contient des informations techniques présentées postérieurement au dépôt de la demande et ne figurant pas dans le présent fascicule.

(73) Titulaire: **SOCIETE NATIONALE DES POUDRES ET EXPLOSIFS, 12, quai Henri IV, F-75181 Paris Cédex 04 (FR)**
Titulaire: **Office National d'Etudes et de Recherches Aérospatiales (O.N.E.R.A.), 29 Avenue de la Division Leclerc, F-92320 Châtillon-sous-Bagneux (FR)**

(72) Inventeur: **Bloch, Bertrand, 4, Square Lagarde, F-75005 Paris (FR)**
Inventeur: **Ropars, Marcel, 4, Parc de Rocquencourt, F-78150 Rocquencourt (FR)**

(74) Mandataire: **Waligorski, Carol, Service de Propriété Industrielle SOCIETE NATIONALE DES POUDRES ET EXPLOSIFS 12, quai Henri IV, F-75181 Paris Cedex 04 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

L'invention est relative à de nouvelles résines thermodurcissables, à durcissement accéléré, préparées à partir de pyridines substituées, à leur procédé de préparation et à leurs applications.

On sait que la réaction de polycondensation entre un ou plusieurs dérivés de pyridine comportant au moins deux groupes méthyle respectivement sur au moins deux des positions 2, 4 ou 6, notamment la diméthyl-2,4-pyridine, la diméthyl-2,6-pyridine, la triméthyl-2,4,6-pyridine et un ou plusieurs dialdéhydes aromatiques, notamment le téréphtaldéhyde, conduit à des résines thermodurcissables douées d'une résistance élevée à la chaleur, et bien adaptées à une utilisation en tant que matrices de matériaux composites à renfort fibreux, ayant de bonnes performances mécaniques, particulièrement à haute température (jusqu'à 450°C, la durée de vie étant évidemment fonction du niveau de température).

Ces résines, ci-après désignées par «résines PSP», ainsi que leur procédé de préparation et leurs applications font notamment l'objet des brevets français n° 2 261 296 et 2 261 297.

Cependant, en tant que résines thermodurcissables, ces produits ne sont durcissables qu'à température relativement élevée. Il en résulte que la température minimum de traitement thermique de la première étape de durcissement pour obtenir la gélification se situe à environ 180°C, ou de préférence environ 200°C, si on désire que ce phénomène ait lieu dans un intervalle de temps raisonnable (environ 1 à 2 heures), et que le temps nécessaire pour la consolidation est relativement long (entre environ 3 et 8 heures). Un post-traitement à température plus élevée (environ 250°C), durant au moins une dizaine d'heures, est également nécessaire pour obtenir l'infusibilité totale et un optimum de performances mécaniques à chaud.

Cette réactivité modérée peut constituer dans certains cas un avantage. Lorsqu'on cherche, par exemple, à élaborer une pièce en matériau composite par injection de résine fondue au sein d'un renfort fibreux préalablement disposé dans un moule, il est nécessaire d'opérer à température assez élevée pour que la viscosité de la résine soit suffisamment réduite; il est indispensable dans ce cas que tout danger de gélification prématurée soit écarté durant l'opération d'injection, et c'est pour cette raison, entre autres avantages d'utilisation, que les résines «PSP» se révèlent parfaitement adaptées à une telle application.

Le fait que les résines «PSP» nécessitent des températures élevées pour qu'ait lieu de durcissement peut cependant, pour d'autres domaines d'application, être un inconvénient; ceci est notamment le cas lorsque les exigences d'une fabrication en série impliquent des cadences de production élevées, ou que le temps d'occupation du matériel de moulage entre pour une part non négligeable dans le prix de revient de la pièce, ou encore que les installations dont on dispose ne permettent pas d'atteindre la température exigée.

La présente invention permet de remédier à ce comportement, lorsqu'il apparaît comme un inconvénient.

Les Inventeurs ont en effet constaté de façon inattendue que l'adjonction aux résines «PSP», d'un ou plusieurs additifs constitués par des composés phénoliques conduisait à de nouvelles résines thermodurcissables dont le durcissement, pour une température donnée, est accéléré par rapport aux résines «PSP» connues ou dont la température de durcissement est abaissée par rapport à celle des résines «PSP» connues.

De façon imprévisible, en effet, dans l'état actuel des connaissances relatives au mécanisme de la réticulation des résines «PSP», les travaux servant de base à la présente invention ont montré que l'adjonction de composés possédant une ou plusieurs fonctions phénoliques conduisait à de nouvelles résines dont le phénomène de durcissement thermique est modifié par rapport aux résines PSP dans le sens, d'une part, d'une accélération à température donnée des différentes étapes de cette transformation (gélification, consolidation, suppression de la fusibilité) et, d'autre part, de l'abaissement des températures nécessaires pour accomplir ces différentes étapes.

L'invention a donc pour objet de nouvelles résines thermodurcissables, à durcissement accéléré, constituées au moins en partie par les produits de la réaction de polycondensation d'un ou plusieurs dérivés de pyridine comportant au moins deux groupes méthyle en positions 2, 4 ou 6 avec un ou plusieurs dialdéhydes aromatiques et l'adjonction d'un additif constitué par un composé phénolique.

Les résines selon l'invention peuvent être préparées en condensant le dérivé méthylé de pyridine sur le dialdéhyde aromatique selon le procédé tel que décrit dans les brevets français n° 2 261 296 et 2 261 297, pour obtenir une résine PSP, et en additionnant à la résine PSP ainsi formée un additif constitué par un composé phénolique.

Dans ce cas, il faut que la résine PSP, qui résulte de la condensation du dérivé de pyridine et du dialdéhyde aromatique soit à une température telle que la gélification ne se produise pas et que l'additif puisse être mélangé. Cette température est généralement voisine de 60°C.

Les composés phénoliques utilisés pour la fabrication des résines selon l'invention, sont choisis parmi:

— les monophénols, tels que l'hydroxybenzène (phénol proprement dit), les alcoylphénols substitués par une ou plusieurs chaînes alcoyle comportant de 1 à 5 atomes de carbone, tels que les crésols, les arylphénols non substitués ou substitués par une ou plusieurs chaînes alcoyle comportant de 1 à 5 atomes de carbone, les phénols comportant 2 à 4 noyaux aromatiques condensés;

— les polyphénols comportant 2, 3 ou 4 groupes phénol, tels que les diphénols, éventuellement arylés ou alcoylés par une ou plusieurs chaînes de 1 à 5 atomes de carbone et/ou à noyaux condensés;

– les phénols substitués par une ou plusieurs fonctions alcool, carboxyle, amine, éther;

– les polymères phénoliques et notamment les résines formophénoliques, résultant de la condensation de phénol et de formol.

Parmi ces composés phénoliques pour la fabrication des résines selon l'invention, on a avantageusement recours aux composés suivants: hydroxybenzène, pyrocatéchol, résorcinol, hydroquinone, alpha-naphtol, métacrésol, résines novolaques préparées à l'aide de formol et de phénol et dans lesquelles le phénol est en excès par rapport au formol (vis-à-vis de l'équimolarité) et dans lesquelles le catalyseur utilisé est acide, des résols formophénoliques préparés à partir de phénol et de formol, le formol étant en excès par rapport au phénol (vis-à-vis de l'équimolarité) et le catalyseur étant basique.

Comme résine novolaque, on peut avantageusement avoir recours à celle obtenue à partir de 1,38 moles de phénol et 1,14 moles de formaldéhyde et catalysée par l'acide oxalique.

Comme résol formophénolique, on peut avantageusement avoir recours à ceux du type commercialisé par la Société RHONE POULENC, sous la dénomination RA 101.

L'influence des additifs phénoliques sur l'accélération du durcissement des résines varie d'un additif à l'autre.

Le résorcinol est l'un des additifs préférés qui entrent dans la constitution des résines selon l'invention.

La quantité d'additif à ajouter au produit résultant de la condensation du dérivé de pyridine et du dialdéhyde aromatique doit être telle que les résines selon l'invention conservent les propriétés mécaniques et thermiques présentées par les résines «PSP».

De façon générale, la proportion des additifs entrant dans la constitution des résines selon l'invention est d'environ 1 à environ 20% et est de préférence compris entre environ 2 et environ 10% en poids par rapport au poids total de la résine, lorsque l'additif n'est pas un composé macromoléculaire.

Lorsqu'on a recours à des résines formophénoliques comme additifs, ces résines formophénoliques, parallèlement à leur activité d'accélérer le durcissement présentent l'avantage d'être miscibles en toutes proportions avec les résines «PSP». Par ailleurs les résines selon l'invention comprenant comme additifs les résines formophénoliques sont thermodurcissables. Cette caractéristique est particulièrement remarquable lorsqu'on utilise, comme additifs, des résines novolaques qui ne sont pas à elles seules thermodurcissables; dans ce cas, les résines novolaques jouent le rôle d'accélérateur du durcissement vis-à-vis des résines «PSP» et les résines «PSP» jouent le rôle de durcisseur vis-à-vis des résines novolaques.

La quantité de résines formophénoliques utilisée en mélange avec les résines «PSP» pour donner les résines selon l'invention est au moins égale à environ 50% en poids par rapport au poids total de la résine.

Les résines selon l'invention peuvent être conservées à la température ambiante jusqu'à leur mise en œuvre ultérieure. Ces résines peuvent être mises en œuvre par les différentes techniques classiques s'appliquant aux résines thermodurcissables. Lorsqu'elles sont sous forme de poudre, elles peuvent être mises en forme par moulage sous pression, mais également être dissoutes dans un solvant ou fondues.

Les résines selon l'invention, particulièrement lorsque les quantités d'additifs restent relativement faibles (inférieures ou égales à 10% en poids par rapport au poids total de la résine) conservent les caractéristiques avantageuses des résines «PSP», à savoir leur résistance à la chaleur élevée, leur excellent comportement au feu. Lorsque l'additif est une résine formophénolique, ces caractéristiques avantageuses peuvent être conservées bien au-delà de cette quantité de 10% en poids.

L'invention vise également l'application de ces nouvelles résines à la réalisation de matériaux composites, notamment sous forme de stratifiés, obtenus de manière classique par imprégnation de charges fibreuses, notamment minérales et/ou réfractaires, au moyen d'une résine thermodurcissable que l'on soumet ensuite à un traitement thermique de durcissement sous pression. Les fibres se trouvent alors finalement noyées dans le polymère.

L'intérêt de l'élaboration de pièces à partir de poudres à mouler, de fibres courtes imprégnées résulte principalement de la rapidité de l'opération rendant possibles des cadences élevées de fabrication.

L'invention sera plus complètement décrite dans le cadre d'exemples particuliers de mise en œuvre.

Exemple 1

La résine «PSP» 6022P, obtenue par condensation de collidine et de téréphaldéhyde (produit industriel fabriqué par la SNPE), est additionnée de proportions variables de différents composés phénoliques. Les temps de gélification de ces mélanges sont mesurés à 200 °C, à l'aide d'un dispositif permettant de détecter le début de l'augmentation du couple résistant d'une tige métallique plongée dans le produit et tournant à faible vitesse.

Les résultats suivants ont été obtenus et sont rassemblés dans le tableau I ci-dessous.

TABLEAU I

| Composé phénolique | Concentration (% en poids par rapport à la quantité totale de résine) | Temps de gélification (mn) |
|---|---|---|
| Phénol | 30 | 100 |
| Hydroquinone | 30 | 85 |
| Résorcinol | 10 | < 5 |

TABLEAU I (suite)

| Composé phénolique | Concentration (% en poids par rapport à la quantité totale de résine) | Temps de gélification (mn) |
|---|---|---|
| Pyrocatéchol | 10 | 45 |
| Alpha-naphtol | 10 | 60 |
| Méta-crésol | 10 | 90 |

Dans le cas de résines PSP pures, c'est-à-dire ne contenant pas de composés phénoliques, le temps de gélification est de 120 mn.

Par conséquent, ce tableau met bien en évidence l'influence variable, mais nette des différents composés phénoliques utilisés, mais également l'activité sensiblement plus élevée du résorcinol, comparativement à tous les autres composés phénoliques.

Exemple 2

Des manipulations analogues à celles de l'exemple 1 ont été effectuées, en utilisant dans tous les cas le résorcinol comme additif, mais introduit à des concentrations variables et en opérant à différentes températures. Les résultats indiquent que l'activité du résorcinol est sensible, même à faible concentration, et permet d'obtenir la gélification à des températures aussi basses que 130 ou 150°C. Les temps de gélification (en minutes) obtenus à différentes températures pour des pourcentages différents de résorcinol sont rassemblés dans le tableau II ci-dessous.

TABLEAU II

| Température | 130° | 150° | 175° | 200° |
|---|---|---|---|---|
| Résorcinol (% en poids par rapport à la quantité totale de résine) | | | | |
| 0 | — | — | — | 120 mn |
| 2 | — | — | 105 | 52 |
| 5 | 130 | 52 | — | — |
| 10 | 70 | 25 | — | — |
| 20 | 17 | 8 | — | — |

L'influence du résorcinol est également sensible en ce qui concerne la consolidation et l'obtention de l'infusibilité des échantillons gélifiés. C'est ainsi que pour une résine contenant 5% de résorcinol, cette infusibilité est obtenue en 80 mn. Pour une résine contenant 10% de résorcinol, ce temps s'abaisse à 40 mn, alors que la résine «PSP» pure, c'est-à-dire ne contenant pas de composés phénoliques, exige 360 mn pour atteindre le même degré de durcissement.

Exemple 3

Un stratifié à renfort de tissu de carbone a été fabriqué à l'aide d'une résine selon l'invention elle-même obtenue à partir de 95% de résine «PSP» et de 5% de résorcinol.

Dans cette intention, une solution de résine type 6022 P additionnée de 5% de résorcinol, de concentration 50% environ dans la méthyléthylcétone, a servi à imprégner 8 plis de tissu de fibres de carbone Toray T300 (tissu 43377 Stevens-Genin). Après séchage, les huit plis sont empilés dans un moule, qui a lui même été porté entre les plateaux d'une presse préchauffée à 150°C.

Une pression d'accostage a été appliquée au bout de 15 mn, et a graduellement été portée à 12 bars en 55 mn (pour la même opération, la résine «PSP» pure aurait exigée 1 h 15 à 200°C).

Au bout de 2 heures de séjour à 150°C, l'empilement a subi des paliers successifs de une heure à 175°C, 200°C, 225°C et 250°C.

Après démoulage, la plaque obtenue, contenant 57% en volume de fibres a subi des essais mécaniques. Sa résistance atteignait 420 MPa à 20°C, et 375 MPa à 250°C, ce qui démontre que son durcissement était effectivement complet (la résine «PSP» exige pour atteindre ce stade, une post-cuisson de 16 heures à 250°C).

Exemple 4

L'accélération du durcissement des résines «PSP» par les résines formophénoliques a été démontré en mesurant les temps de gélification à 180 et 200°C de différentes résines résultant du mélange entre une résine «PSP» et une résine formophénolique dans les mêmes conditions que celles décrites à l'exemple 1.

Les temps de gélification (en minutes) obtenus avec les deux types de résines formophénoliques à deux températures différentes sont rassemblés dans le tableau III ci-après.

TABLEAU III

| % en poids de résine formophénolique par rapport à la quantité totale de résine | Novolaque | | Résol | |
|---|---|---|---|---|
| | 180° | 200° | 180° | 200° |
| 0 | 270 mn | 115 | 270 | 115 |
| 10 | 160 | 70 | 135 | 50 |
| 20 | 100 | 30 | 80 | 25 |
| 30 | 70 | 25 | 30 | 15 |
| 40 | 50 | 22 | 20 | 10 |
| 50 | 45 | 19 | 10 | 5 |

Cette résine formophénolique est constituée, dans une série d'essais, par la résine novolaque préparée à partir de 1,38 moles de phénol et 1,14 moles de formaldéhyde et dans une seconde série d'essais, par un résol du type RA 101, commercialisé par RHONE POULENC.

Ces résultats montrent clairement l'influence de ces additifs et pour le type de résine «PSP» utilisé, la résine selon l'invention obtenue avec le résol présente un durcissement plus rapide que celle obtenue avec la résine novolaque.

## Revendications

1. Résines thermodurcissables à durcissement accéléré constituées au moins en partie par les produits résultant de la polycondensation d'un ou plusieurs dérivés de pyridine comportant au moins deux groupes méthyle en position 2, 4 ou 6 avec un ou plusieurs dialdéhydes aromatiques, caractérisées par l'addition aux produits de la polycondensation d'un ou plusieurs additifs constitués par des composés phénoliques choisis parmi l'hydroxybenzène, les alcoylphénols substitués par une ou plusieurs chaînes alcoyle ayant de 1 à 5 atomes de carbone, tels que les crésols, les arylphénols non substitués ou substitués par une ou plusieurs chaînes alcoyle ayant de 1 à 5 atomes de carbone, les phénols comportant de 2 à 4 noyaux aromatiques condensés, les polyphénols ayant 2, 3 ou 4 groupes phénol, tels que les diphénols, éventuellement arylés ou alcoylés par une ou plusieurs chaînes alcoyle ayant de 1 à 5 atomes de carbone, et/ou à noyaux condensés, les phénols substitués par une ou plusieurs fonctions alcool, carboxyle, amine, éther, les polymères phénoliques et notamment les résines formophénoliques, dans une proportion étant au moins environ 50% en poids par rapport au poids total de la résine lorsque ledit additif est une résine formophénolique et dans une proportion variant d'environ 1 à 20% et de préférence entre 2 et environ 10%, en poids par rapport au poids total de la résine pour tous les autres composés phénoliques.

2. Résines selon la revendication 1, caractérisées en ce que les composés phénoliques sont choisis parmi l'hydroxybenzène, le pyrocatéchol, le résorcinol, l'hydroquinone, l'alpha-naphtol, le métacrésol, les résines novolaques, les résols formophénoliques.

3. Résines selon l'une quelconque des revendications 1 à 2, caractérisées en ce que le composé phénolique est le résorcinol.

4. Résines selon l'une quelconque des revendications 1 à 3, dans laquelle le dérivé de pyridine est la triméthyl-2,4,6-pyridine, le dialdéhyde aromatique est l'aldéhyde téréphtalique caractérisé en ce que l'additif est choisi parmi l'hydroxybenzène, l'hydroquinone, le résorcinol, le pyrocatéchol, l'alpha-naphtol ou le métacrésol.

5. Résine selon l'une quelconque des revendications 1 à 4, caractérisée en ce qu'elle est mise sous forme de poudre à mouler.

6. Procédé de préparation des résines selon l'une quelconque des revendications 1 à 5, caractérisé en ce que l'on additionne un ou plusieurs additifs constitué par des composés phénoliques au produit résultant de la condensation d'un ou plusieurs dérivés de pyridine sur un ou plusieurs dialdéhydes aromatiques, lequel produit se trouve à une température telle qu'il n'y ait pas de gélification et que le susdit additif puisse être mélangé.

7. Application des résines selon l'une quelconque des revendications 1 à 5, à la réalisation de matériaux composites, par imprégnation de matières fibreuses au moyen desdites résines et durcissement des matières fibreuses ainsi imprégnées.

8. Matériaux composites, constitués de fibres telles que des fibres de carbone et de résines selon l'une quelconque des revendications 1 à 5, à l'état durci.

## Claims

1. Thermosetting polymers exhibiting an accelerated cure comprised at least in part of the products resulting from the condensation polymerization of one or more pyridine derivatives having at least two methyl groups at position 2, 4 or 6 with one or more aromatic dialdehydes, characterized by the addition to the products of the condensation polymerization of one or more additives, comprising phenolic compounds selected from hydroxybenzene, alkylphenols substituted by one or more alkyl chains having 1 to 5 carbon atoms, such as cresols, arylphenols which are unsubstituted or substituted by one or more alkyl chains having 1 to 5 carbon atoms, phenols having 2 to 4 fused aromatic rings, polyphenols having 2, 3 or 4 phenol groups, such as diphenols, which may be aryl or alkyl substituted by one or more alkyl chains having 1 to 5 carbon atoms, and/or fused rings, phenols substituted by one or more alcohol, carboxyl, amine, ether functional groups, phenolic polymers and in particular phenol formaldehyde polymers, in a proportion of at least about 50% by weight based on the total weight of polymer when said additive is a phenol formaldehyde polymer and in a proportion in the range of about 1 to 20% and preferably in the range 2 to about 10%, by weight based on the total weight of polymer for all the other phenolic compounds.

2. Polymers according to Claim 1, characterized in that the phenolic compounds are selected from hydroxybenzene, pyrocatechol, resorcinol, hydroquinone, alpha-naphthol, metacresol, novolak polymers, phenol formaldehyde resols.

3. Polymers according to any one of Claims 1 to 2, characterized in that the phenolic compound is resorcinol.

4. Polymers according to any one of Claims 1 to 3, in which the pyridine derivative is 2,4,6-trimethylpyridine, the aromatic dialdehyde is terephthalic aldehyde characterized in that the additive is selected from hydroxybenzene, hydroquinone, resorcinol, pyrocatechol, alpha-naphthol or metacresol.

5. Polymer according to any one of Claims 1 to 4, characterized in that it is brought to the form of a moulding powder.

6. Process for the preparation of polymers according to any one of Claims 1 to 5, characterized in that one or more additives comprising phenolic compounds are added to the product resulting from the condensation of one or more pyridine derivatives with one or more aromatic dialdehydes, the said product being at a temperature such that there is no gelling and such that the aforesaid additive can be mixed in.

7. Use of polymers according to any one of Claims 1 to 5, for producing composite materials, by impregnation of fibrous materials using the said polymers and curing the fibrous materials thus impregnated.

8. Composite materials, comprising fibres such as carbon fibres and polymers according to any one of Claims 1 to 5, in the cured state.

## Patentansprüche

1. Wärmehärtbare Kunstharze mit beschleunigter Härtung aus, zumindest teilweise, Polykondensationsprodukten von mindestens einem Pyridinderivat mit mindestens zwei Methylgruppen in Stellung 2, 4 oder 6 und mindestens einem aromatischen Dialdehyd, gekennzeichnet durch Zugabe zu den Polykondensationsprodukten mindestens einer Phenolverbindung als Zusatz, gewählt unter Hydroxybenzol, Alkylphenolen, die mit mindestens einer Alkylkette mit 1 bis 5 Kohlenstoffatomen substituiert sind, wie Kresole, ggfs. mit mindestens einer Alkylkette mit 1 bis 5 Kohlenstoffatomen substituierten Arylphenolen, Phenolen mit 2 bis 4 kondensierten aromatischen Kernen, Polyphenolen mit 2, 3 oder 4 Phenolgruppen, wie Diphenolen, die ggfs. aryliert oder mit mindestens einer Alkylkette mit 1 bis 5 Kohlenstoffatomen alkyliert sind und/oder kondensierte Kerne aufweisen, Phenolen, die mit mindestens einer Alkohol-, Carboxyl-, Amin- oder Ethergruppe substituiert sind, Phenolpolymeren und insbesondere Phenol-Formaldehydharzen, in einer Menge von mindestens etwa 50 Gew.-%, bezogen auf das Gesamtgewicht des Kunstharzes, wenn der Zusatz ein Phenol-Formaldehydharz ist, und in einer Menge von etwa 1 bis 20 und vorzugsweise von 2 bis etwa 10 Gew.-%, bezogen auf das Gesamtgewicht des Kunstharzes, bei allen anderen Phenolverbindungen.

2. Kunstharze nach Anspruch 1, dadurch gekennzeichnet, daß die Phenolverbindungen unter Hydroxybenzol, Pyrocatechin, Resorcin, Hydrochinon, α-Naphthol, m-Kresol, Novolak-Harzen und Phenol-Formaldehydharzen ausgewählt werden.

3. Kunstharze nach Anspruch 1 oder 2, dadurch gekennzeichnet, daß die Phenolverbindung Resorcin ist.

4. Kunstharze nach einem der Ansprüche 1 bis 3, in denen das Pyridinderivat 2,4,6-Trimethylpyridin und der aromatische Dialdehyd Terephthalaldehyd ist, dadurch gekennzeichnet, daß der Zusatz unter Hydroxybenzol, Hydrochinon, Resorcin, Brenzcatechin, α-Naphthol oder m-Kresol gewählt wird.

5. Kunstharze nach einem der Ansprüche 1 bis 4, dadurch gekennzeichnet, daß sie als formbare Pulver vorliegen.

6. Verfahren zur Herstellung der Kunstharze nach einem der Ansprüche 1 bis 5, dadurch gekennzeichnet, daß die Polykondensationsprodukte mindestens eines Pyridinderivats und mindestens eines aromatischen Dialdehyds mit mindestens einer Phenolverbindung als Zusatz versetzt werden, wobei die Produkte eine solche Temperatur haben, daß sie nicht gelieren und der Zusatz eingemischt werden kann.

7. Verwendung der Kunstharze nach einem der Ansprüche 1 bis 5 zur Herstellung von Verbundwerkstoff durch Imprägnieren von Fasermaterial mit den Kunstharzen und Härtung des so imprägnierten Fasermaterials.

8. Verbundwerkstoff aus Fasern, wie Kohlenstoffasern, und Kunstharzen nach einem der Ansprüche 1 bis 5 im gehärteten Zustand.